# EUROPEAN PATENT APPLICATION

(11) **EP 2 548 767 A1**
(43) Date of publication of application: **23.01.2013**
(21) Application number: 12173683.9
(22) Date of filing: 26.06.2012
(51) Int. Cl.: B60P 3/39

(54) **Scissor type lifting device, for beds of recreational vehicles**

(30) Priority: 01.07.2011 IT PI20110073
(71) Applicant: ST.LA.Srl, 56025 Pontedera (PI) (IT)
(72) Inventor: Zappolini, Stefano, 56020 Montopoli V.A. (PI) (IT)
(74) Representative: Leotta, Antonio

(57) **Abstract**

A scissor-like lifting device for beds of recreational vehicles comprises at least one pair of gear members (22,23) that form a gear assembly for transmitting motion from a first rod (12) of the scissor linkage to at least one lever driven by linear motion assisting means (26,27) that may be linear actuators, gas springs, or other type of elastic elements. The presence of the gear assembly (22,23) and the lever elements (24,25) allows positioning such linear drive assisting means (26,27) in a much more rational and effective way.

## Description

### TECHNICAL FIELD

The present invention concerns a scissor type lifting device, in particular for beds of recreational vehicles.

### BACKGROUND ART

In the field of recreational vehicles, in particular camping vehicles or leisure cabin boats, are known bed lifting devices which are adapted to keep the bed in a lifted position for not occupying the internal volume of the vehicle when they are not in use and to allow lowering the bed and keeping it in the in use position.

One type of widely used devices for the aforesaid purposes are those with scissor mechanism, in that they have a kinematic structure very simple and robust. In this case, the bed frame is supported at two opposite sides by two scissor type lifting devices that simultaneously perform the same movements allowing the vertical translation of the bed which always remains in a substantially horizontal configuration.

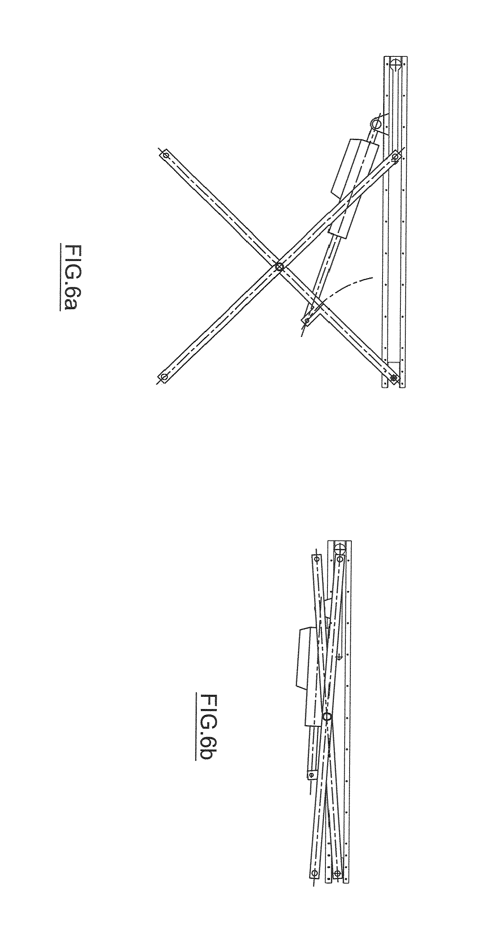

In figures 6a and 6b is shown a scissor type lifting device of the prior art. In these devices a first arm is tilting around a fixed support element while a second arm, hinged to the first one at a longitudinally intermediate portion in order to create the scissor type kinematic mechanism, is tilting with respect to the fixed support and at the same time the pin which locates the axis of rotation is able to slide horizontally in a groove of the support element. In this type of devices often linear actuators or gas springs are provided for, respectively, automate or facilitate their activation. In all the scissor type lifitng devices of the prior art the motion assisting means are anchored between the fixed support and one of the arms that form the scissor type kinematic mechanism. As shown in Figure 6a the motion assisting means create a rather significant encumbrance in the section below the fixed support element. The problem of dimensions is particularly acute in the field of recreational vehicles. In addition, to ensure that the moment of the force exerted by the motion assisting means relative to the axis of oscillation is sufficiently high it is almost always necessary, in this type of devices, to provide for a auxiliary bracket integral with the oscillating arm to which the motion assisting means have to be constrained in order to increase the distance at which the force is applied relative to the axis of oscillation.

### SUMMARY OF INVENTION

It is object of the present invention to propose a scissor type device for supporting and lifting beds of recreational vehicles with increased structure, which is able to overcome the above described limits of the devices of the scissor type lifting devices of the prior art.

The above objects are achieved by a supporting and lifting device for beds of recreational vehicles comprising:
- an elongate support member rigidly bound in a fixed position to a substantially vertical wall of a vehicle;
- a first rod rigidly coupled at one of its ends to the support member for swinging and at its opposite end to the bed frame for swinging and sliding in a substantially horizontal direction;
- a second rod rigidly coupled at one of its ends to the support member for swinging and sliding in a substantially horizontal direction and rigidly coupled at its opposite end to the bed frame for swinging; the first rod and the second rod being hinged together at an intermediate portion between their respective ends; the support element, the first rod and the second rod forming a scissor type lifting device, which further comprises
- a first gear member rotatable integrally to the first rod around its axis for swinging with respect to said support member;
- at least a second gear member rotatably constrained to said support member, said second gear member engaging said first gear member, said second gear member being provided with at least one lever element extending from said second gear member in a direction substantially orthogonal to the respective axis of rotation, and
- linear drive assisting means anchored at one end to said support member and at the other end to said lever element for applying a force on said lever element which tends to let the second gear member rotate. Advantageously the lever element extends upwards from the second gear member so that it is able to swing with respect to a substantially vertical direction.

Alternatively, the lever element extends downward from the second gear member so that it is able to swing with respect to a substantially vertical direction.

Advantageously, the linear drive assisting means comprise at least one linear actuator and / or elastic means for compression and / or traction. These elastic means may be advantageously be at least one gas spring.

In the scissor-like support and lifting device of the invention the linear drive assisting means operates between the support member and the lever elements whose rotation is transmitted to the first rod thanks to the presence of the gear assembly which consists of toothed elements. In this way it is possible to contain the overall dimensions of the device, because the aforesaid linear drive assisting means remain disposed close to the support member in a direction substantially parallel to it. Furthermore, the linear drive assisting means operates in a direction substantially orthogonal to the lever elements while avoiding the risk of jamming and ensuring a particularly effective action without having to oversize the assisting means themselves. The embodiment with two lever elements allows the simultaneous adoption of linear actuators and elastic elements in a configuration particularly rational. The version with a lever element which extends upwards allows to reduce particularly the overall thickness of the device avoiding possible interference between the linear drive assisting means and the scissor rods of the device.

### BRIEF DESCRIPTION OF DRAWINGS

These and more advantages of the device of the invention will be more promptly comprehensible by disclosing preferred embodiments, not limiting, as described in the following with reference to the appended drawings, in which:
- figure 1 shows a perspective view of a bed supported by two support and lifting devices according to the invention;
- figure 2 shows front views of a support and lifting device according to the invention, fig. 2a shows the device in a completely extended configuration in which the bed is in the lower position, fig. 2b shows the device in the completely closed configuration in which the bed is supported in a raised position;
- figure 3 shows a detail view of fig. 2a in partial section;
- figure 4 shows a second embodiment of the device of the invention in a configuration similar to the one of fig. 2a;
- figure 5 shows a third embodiment of the device of the invention in a configuration similar to the one of fig. 2a;
- figure 6 shows front views of a scissor-like support and lifting device of the prior art, fig. 6a shows the device in a completely extended configuration in which the bed is in the lower position, fig. 6b shows the device in the completely closed configuration in which the bed is supported in a raised position.

### DESCRIPTION OF EMBODIMENTS

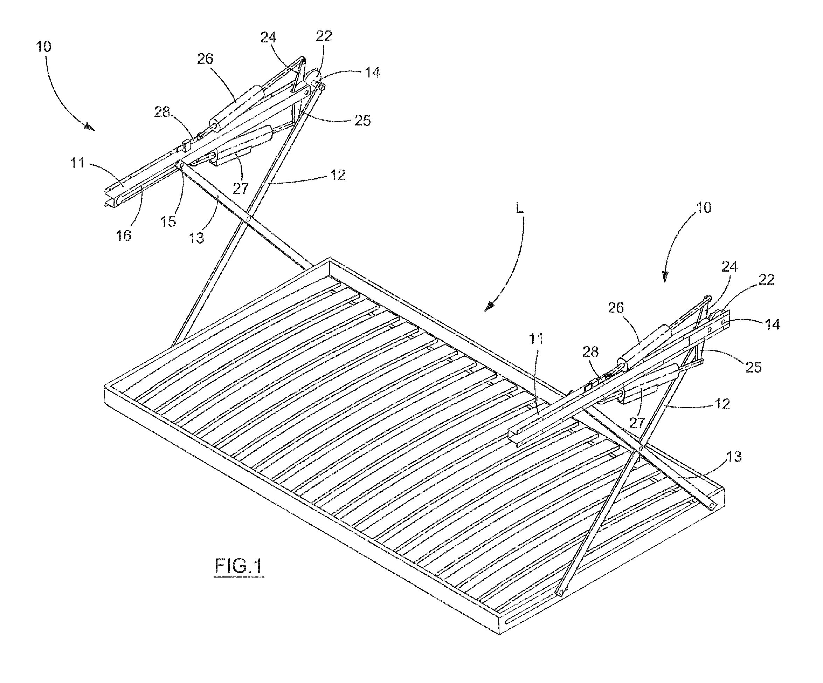

In fig.1 it is shown a bed, L, constrained at two opposite ends to two respective support and lifting devices, 10. The devices 10 are constituted by structural elements forming a two-dimensional kinematic mechanism through which the bed can be translated from the configuration of fig.1, which corresponds to the extended configuration of the kinematic mechanism and to the position of use of the bed in the lower position, towards a closed position of the device 10 in which the bed is raised so as to encumber to a minimum the space inside the camper or recreational vehicle in which it is housed.

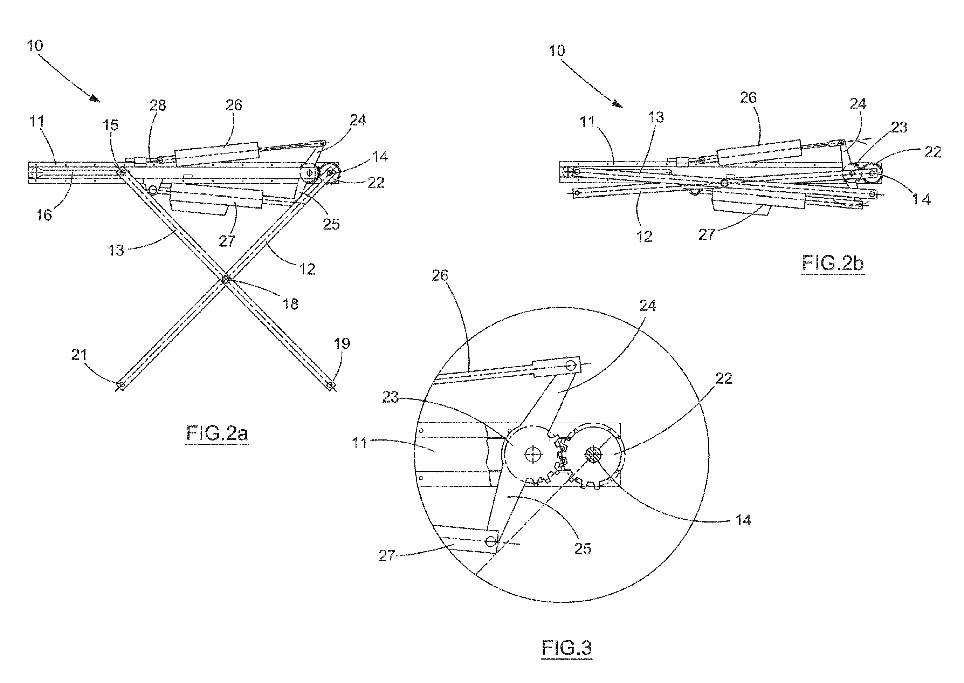

With reference to Figures 1 to 3, the device 10 comprises a support member, 11, which can be bound in a fixed horizontal position to a vertical wall of the vehicle, a first bed supporting rod, 12, and a second bed supporting rod, 13. The first rod 12 is hinged at an end thereof to one end of the support member 11 thanks to a first pin, 14 with horizontal axis rotatably constrained to the support member 11. The second rod 13 is bound at one of its ends to the support member 11 for swinging and horizontally sliding thanks to the presence of a second pin, 15, with horizontal axis rotatably constrained to the support member 11 and sliding in a horizontal slot, 16, provided in the latter. The first rod 12 and second rod 13 are hinged together in their intermediate portion via a hinge element 18. The rods 12 and 13 are respectively bound at their other ends to the bed frame in a similar way to that in which they are bound to the support member 11. In particular, the end 19 of the rod 13 is constrained to the frame of the bed L in swivel mode and the end 20 of the rod 12 is constrained to the frame of the bed L for rotating and horizontally sliding. The support member 11 is fastened to a vertical wall of the vehicle and thanks to the scissor-like kinematic mechanism formed by the rods 12 and 13 the frame of the bed can be raised and lowered while it remains in a horizontal configuration.

The pin 14 is integral with a first gear member 22, which rotates around the axis of the pin 14 integrally with the rod 12. A second gear member, 23, rotatably constrained to the support member 11 engages the first gear member 22 and is provided with two lever elements, 24, 25, which extend from it in opposite directions. A first lever element, 24, extends upwardly, and a second lever element, 25, extends downwards. The lever elements 24, 25, are bound to linear drive assisting means, 26, 27, which are further bound to the other respective ends to the support member 11. In particular, the end of the first lever element 24 is bound to a gas spring, 26, which is further bound at the other end to a top surface of the support member 11 by means of a tie rod, 28, which allows to adjust the stroke of the gas spring. At the end of the second lever element 25 is bound a linear actuator, 27, which is further constrained to the other of its ends to a bottom surface of the support member 11. The linear drive assisting means 26, 27 exert an action on the lever elements 24, 25 to which they are respectively connected, thus tending to make rotate the second gear member 23 which consequently transmits the rotation to the first gear member 22 and then to first rod 12. By suitably dimensioning the ratio between the diameters of the two gear members 22 and 23 and the length of the lever elements 24, 25, it is possible to determine the most suitable transmission ratio to correctly choose the proper linear drive assisting means 26 and 27 so as to obtain the desired effects on the movement of the rods 12 and 13, also as a function of the weight to be supported and lifted.

From the above description it is evident that the scissor-like support and lifting device of the present invention allows a much more efficient and rational use of linear drive assisting means and it allows a reduction of the overall size of the device. Obviously, these characteristics are particularly important in campers or recreational vehicles where, typically, the space available is very limited.

The above mentioned advantages in the application fields outlined above remain even in the presence of changes and modifications to the embodiment above illustrated by example.

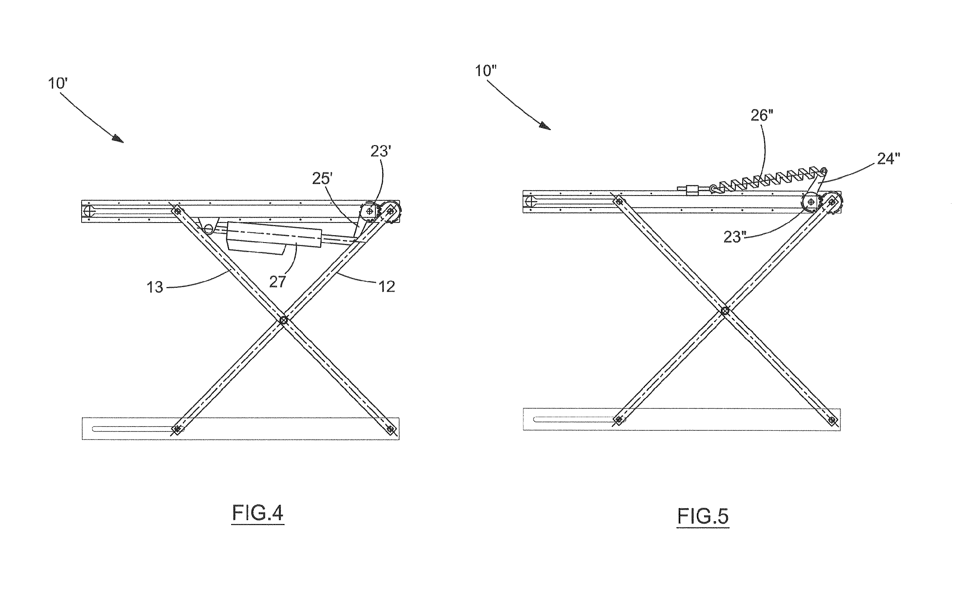

In figure 5 it is shown a front view of a second embodiment of a support and lifting device, 10 ', according to the invention in which the second gear member, 23', is provided with only one lever element, 25 ', extending downwards which is connected to a linear actuator, 27, which drives the scissor-like kinematic mechanism formed by the rods 12 and 13.

In figure 6 it is shown a front view of a third embodiment of a support and lifting device, 10", according to the invention in which the second gear member 23", is provided with only one lever element, 24" , extending upwardly to which is connected a helical traction spring, 26", that carries out an action that tends to bring the device 10" toward the closed configuration, thus counteracting the action of the weight of the frame of the bed and its load which tend to bring the device in the extended configuration.

Further embodiments may relate to the structure and conformation of the support member 11 which may be composed of multiple separate components functionally equivalent to the element described above. For example, a component may support the group comprising the first rod 12 and the gear members 22 and 23, while a further component of the support member could be provided with the groove 16 in which the pin 15 slides. The above two components may be separately bound to a substantially vertical wall of the vehicle in such a way, however, that the rods 12 and 13 realize a scissor-like kinematic mechanism. The linear drive assisting means 26, 27 which at one end are connected to the lever elements 24, 25, at the other end thereof may be bound to further separate components of the support member 11 or even directly to the vertical wall of the vehicle.

The pins and the hinges 14, 15, 18 could be replaced with connecting and constraining means which are equivalent from a kinematic point of view.

These and other changes and modifications can be made to the support and lifting device of the present invention still keeping safe the above outlined individual advantages derived therefrom, while remaining within the scope of protection provided by the following claims.

In fact, the above description of specific embodiments is useful to disclose the basic concepts of the invention, so that the skilled person of the sector is able to put it into practice by modifying and adapting such embodiments to various applications; such adaptations and modifications will therefore be considerable as equivalents of the described embodiments. It is understood that the wording or numbering used are for illustration and to aid in the understanding of the inventive concept and not of limitation.

## Claims

1. Lifting device for beds of recreational vehicles comprising an elongated support member (11) which can be firmly bound to a substantially vertical wall of a recreational vehicle; a first rod (12) bound at one end to said support member (11) for swinging and bound at its other end to a frame of a bed (L) for swinging and horizontally sliding; a second rod (13) bound at one end to said support member (11) for swinging and horizontally sliding and bound at the other end to the frame of said bed (L) for swinging; said first rod (12) and said second rod (13) being pivotably bound each other at an intermediate portion between their ends thereof; said support member (11), said first rod (12) and said second rod (13) forming a scissor-like lifting mechanism, **characterized in that** it comprises a firs gear member (22) integral to said first rod (12) for swinging with respect to said support member (11); at least a second gear member (23) engaging said first gear member (22), said second gear member (23) providing at least a protruding element (24, 25) extending from said second gear member (23) in a direction perpendicular to the swinging axis of the second gear member (23); and linear drive assisting means (26, 27) bound at one end to said support member (11) and at the opposite end to said protruding element (24, 25) for applying a force on said protruding element (24, 25) which tends to let the second gear member (23) rotate.

2. Lifting device for beds of recreational vehicles according to claim 1 **characterized in that** said protruding element (24) upwards extends from said second gear member (23) for swinging from a substantially vertical direction.

3. Lifting device for beds of recreational vehicles according to claim 1 **characterized in that** said protruding element (25) downwards extends from said second gear member (23) for swinging from a substantially vertical direction.

4. Lifting device for beds of recreational vehicles according to any preceding claim **characterized in that** it comprises two protruding members (24, 25), a first protruding element (24) upwards extending and a second protruding element (25) downwards extending from said second gear member (23).

5. Lifting device for beds of recreational vehicles according to any preceding claim **characterized in that** said linear drive assisting means (26, 27) comprises at least a linear actuator (27).

6. Lifting device for beds of recreational vehicles according to any preceding claim **characterized in that** said linear drive assisting means (26, 27) comprises elastic means for working in traction and/or compression.

7. Lifting device for beds of recreational vehicles according to any preceding claim **characterized in that** said elastic means comprises at least a gas spring (26).
